(19) **Europäisches Patentamt**

**European Patent Office**

**Office européen des brevets**

(11) **EP 0 913 366 B1**

(12) **EUROPÄISCHE PATENTSCHRIFT**

(45) Veröffentlichungstag und Bekanntmachung des Hinweises auf die Patenterteilung:
**08.01.2003 Patentblatt 2003/02**

(51) Int Cl.$^7$: **C03C 3/095**

(21) Anmeldenummer: **98118761.0**

(22) Anmeldetag: **05.10.1998**

(54) **Erdalkalialuminoborosilicatglas für Lampenkolben und dessen Verwendung**

Alkaline earth aluminoborosilicate glass for lamp envelopes and its use

Verre d'aluminoborosilicate alkalins-terreux pour enveloppes de lampes et son utilisation

(84) Benannte Vertragsstaaten:
**BE DE ES FR GB IT NL**

(30) Priorität: **27.10.1997 DE 19747354**

(43) Veröffentlichungstag der Anmeldung:
**06.05.1999 Patentblatt 1999/18**

(73) Patentinhaber:
• **Schott Glas**
 **55122 Mainz (DE)**
 Benannte Vertragsstaaten:
 **BE DE ES FR IT NL**
• **CARL-ZEISS-STIFTUNG trading as Schott Glas**
 **55122 Mainz (DE)**
 Benannte Vertragsstaaten:
 **GB**

(72) Erfinder:
• **Naumann, Karin, Dr.**
 **55270 Ober-Olm (DE)**
• **Ott, Franz, Dr.**
 **95666 Mitterteich (DE)**

(56) Entgegenhaltungen:
EP-A- 0 638 526      DD-A- 259 099
DE-A- 3 305 587      US-A- 3 310 413
US-A- 4 394 453      US-A- 5 489 558

• SOVIET INVENTIONS ILLUSTRATED Section Ch, Week 7940 Derwent Publications Ltd., London, GB; Class L01, AN 79-73371B XP002093626 & SU 642 265 A (NIKULIN V KH) , 15. Januar 1979

**Beschreibung**

Die Erfindung betrifft ein Erdalkalialuminoborosilicatglas für Molybdän-Komponenten aufweisende Lampenkolben mit Kolbentemperaturen von ca. 550 - 650 °C sowie dessen Verwendung.

Es ist bekannt, daß Gläser für den genannten Verwendungszweck praktisch alkalioxid-frei sein müssen, da Alkaliionen den regenerativen Halogenkreislauf der Lampe stören. Im Betrieb der Lampe bildet sich nämlich aus dem Wolframdampf von der Wendel und der Halogen-Inertgas-Mischung ein Gleichgewicht zwischen Bildung und Zerfall von Wolfram-Halogeniden. Dabei findet die Zerfallsreaktion bei höheren Temperaturen als die Bildungsreaktion statt, so daß sich das Wolfram wieder auf der Wendel abscheidet. Wird dieser Kreislauf durch verunreinigende Komponenten wie beispielsweise Alkaliionen gestört, scheidet sich das Wolfram statt auf der Wendel auf der Glaskolbeninnenseite als schwarz glänzender störender Belag ab. Daher werden an solche Gläser hohe Anforderungen bezüglich Alkalioxidfreiheit gestellt.

Verunreinigungen, die den regenerativen Halogenkreislauf beeinträchtigen, werden nicht nur über das Glas eingebracht, sondern auch über das Fertigungsverfahren der Lampenherstellung selbst. Daher ist auch die Reinheit des vewendeten Elektrodenmaterials von großer Bedeutung. Verfahren zur Reinigung, beispielsweise eine Vorbehandlung der Elektroden durch Ausglühen, sind zu aufwendig und teuer. Gleiches gilt auch für das Tempern alkalireicher Glaskolben.

Für die Verwendung als Lampenkolbenglas für Lampenkolben, die Molybdän-Komponenten als Zuleitungselektroden enthalten, muß das Glas über den gesamten Temperaturbereich der Lampe in seinem thermischen Ausdehnungsverhalten an das von Molybdän angepaßt sein, um eine hermetisch dichte Verbindung zwischen Glas und Zuleitung zu gewährleisten. Dabei muß das Glas bei dessen Erstarrungstemperatur (Einfriertemperatur oder Set-Point) im Vergleich zum Molybdän eine höhere Dehnung besitzen, d. h. die Dehnungsdifferenz zwischen Mo und dem Glas muß positiv sein, um im Glas eine für die Abdichtung von Mo-Zuleitungen günstige radiale Druckspannung zu erzielen. Das Glas sollte daher einen Ausdehnungskoeffizienten $\alpha_{20/300}$ zwischen $4{,}4 * 10^{-6}/K$ und $4{,}7 * 10^{-6}/K$ besitzen. Auch muß es eine ausreichende thermische Stabilität besitzen, um sich beim Betrieb der Lampe aufgrund der auftretenden Kolbentemperaturen nicht zu verformen.

Eine weitere Anforderung an ein für die Verwendung als Kolbenglas für Lampenkolben geeignetes Glas ist seine Eignung für den Rohrzug. Dafür muß es ausreichend kristallisationsstabil sein.

In der Patentliteratur existieren bereits zahlreiche Schriften, die Gläser für solche Glühlampen betreffen.

Wasser bzw. die Wasserstoffionen wirken sich, analog zu den Alkaliionen, ebenfalls störend auf den Halogenkreislauf aus.
Daher wird auch in US 4,163,171 eine Glühlampe beschrieben, deren Glas nicht nur "im wesentlichen alkalifrei" ist, sondern auch nur weniger als 0,03 Gew.-% Wasser enthalten darf.

DE 33 05 587 A1 beschreibt Glühlampen aus hoch BaO-haltigen (11 - 16 Gew.-%) Glaskolben. DE 29 30 249 C2 betrifft die Verwendung von ebenfalls hoch BaO-haltigen (10 - 23 Gew.-%) Glaszusammensetzungen als Kolbenmaterial, in denen außerdem das Gewichtsverhältnis BaO : CaO zwischen 2,3 und 3,5 beträgt. (CaO : BaO zwischen 0,28 und 0,43). Die Gläser der letztgenannten Schrift sollen eine verbesserte Beständigkeit gegen das sogenannte Nachschäumen ("reboil") besitzen. Beim Nachschäumen handelt es sich um die Tendenz des Glases, beim Wiederbearbeiten mit einer Flamme oder beim Wiedererhitzen viele kleine Blasen von eingeschlossenen Gasen zu bilden. Dadurch wird die Lichtdurchlässigkeit verschlechtert und werden die wiedererhitzten Bereiche geschwächt. Nachteilig an den Gläsern mit sehr hohen BaO-Anteilen ist, daß sie, verglichen mit Gläsern mit hohen Anteilen an anderen Erdalkalioxiden, hohe Schmelz- und Verarbeitungstemperaturen aufweisen. Hohe Schmelztemperaturen bedeuten hohen Energieverbrauch, hohe Schmelzkosten und stärkere Korrosion des Wannenmaterials.

US 3,496,401 beschreibt Glühlampen aus einem Erdalkalialuminosilicatglas mit einem Höchstgehalt von 0,1 Gew.-% an Alkalioxiden, insbesondere aus Gläsern aus $SiO_2$ $Al_2O_3$ und 10 - 25 Gew.-% Erdalkalioxiden, deren Einzelanteile nicht weiter spezifiziert sind. $B_2O_3$ ist nur fakultaive Komponente.

US 3,310,413 beschreibt Erdalkalialuminoborosilicatgläser für Einschmelzungen mit Molybdän mit definierten Verhältnissen der Erdalkalioxide untereinander. So ist mit MgO als fakultativem Bestandteil sowohl das Verhältnis MgO zu BaO auf weniger als 0,75 als auch das Verhältnis von CaO zur Summe aus MgO und BaO auf 0,6 bis 2,0 begrenzt.

Die Glasmäntel für Wolfram-Halogenlampen aus US 4,394,453 enthalten viel $Al_2O_3$ (wenigstens 16 Gew.-%), was auch zu einem relativ niedrigen Verhältnis $SiO_2$ / $Al_2O_3$ führt.

Auch US 4,409,337 beschreibt Gläser für Glasmäntel von Wolfram-Halogenlampen, die relativ zum $Al_2O_3$-Anteil niedrige $SiO_2$ - Gehalte aufweisen, ausgedrückt durch das Gewichtsverhältnis $SiO_2$ / $Al_2O_3$ von hier 3,1 - 3,7.

US 5,489,568 beschreibt Gläser, die insbesondere für die Verwendung in Flachglasdisplays geeignet sind. Diese Gläser enthalten entweder viel $Al_2O_3$ ($\geq$ 18 Gew.-%) bei relativ geringen $SiO_2$-Gehalten ($\leq$ 55 Gew.-%) oder wenig $Al_2O_3$ ($\leq$ 13 Gew.-%) bei höheren $SiO_2$-Gehalten ($\geq$ 55 Gew.-%), und das damit erreichte Viskositätsverhalten ist insbesondere auf die Ziehtechnologie von Flachglasscheiben und weniger auf die von Rohren für den Lampenbau abgestimmt. Diese Gläser sind speziell an a- und poly-Silicium und weniger an Mo angepaßte Gläser. Analoges gilt für die Gläser aus EP 0 672 629 A2 und US 5,508,237.

Ein kommerziell erhältliches Glas für die beschriebene Verwendung ist das Glas 8252 der Anmelderin mit der Zusammensetzung (Gew.-% gerundet) 60 $SiO_2$; 4,5 $B_2O_3$; 14,5 $Al_2O_3$; 2 MgO; 10 CaO; 9 BaO. Es ist aufgrund seines Eigenschaftsprofils (z.B. $\alpha_{20/300}$ 4,6 $*$ $10^{-6}$/K, $T_g$ 720 °C) als Lampenkolbenglas für Temperaturen von ca. 550 - 650 °C sehr gut geeignet.

Jedoch gilt sowohl für aus diesem Glas als auch aus den vorher genannten Gläsern hergestellte Lampen, daß die Funktion der Lampen sehr leicht durch Verunreinigungen, seien sie aus dem Glas oder aus dem Elektrodenmaterial des Lampengestells, beeinträchtigt wird, was sich in der oben beschriebenen Schwarzfärbung der Glaskolbeninnenseite aufgrund einer Störung des Halogenkreislaufes bemerkbar macht. Es müssen also sehr hohe Anforderungen an die Reinheit, insbesondere an die Alkalifreiheit, gestellt werden.

Es ist nun Aufgabe der Erfindung, ein Glas zu finden, bei dessen Verwendung als Kolbenglas besagte Schwarzfärbung mit geringerem Aufwand verhindert werden kann.

Diese Aufgabe wird durch das im Hauptanspruch beschriebene ceroxid-haltige Erdalkalialuminoborosilicatglas gelöst.

Das Glas enthält 59 bis 61 Gew.-% $SiO_2$. Bei höheren Gehalten wäre die thermische Dehnung zu gering, bei niedrigeren Gehalten nähme der thermische Ausdehnungskoeffizient zu hohe Werte an und würde die Transformationstemperatur herabgesetzt.

Das Glas enthält 13,5 bis 15,5 Gew.-% $Al_2O_3$. Auch Abweichungen von diesem Bereich würden zu Abweichungen von der gewünschten thermischen Dehnung und damit zu Dehnungsfehlanpassungen führen. Auch würden die Viskositätsparameter nachteilhaft verändert.

Durch den Mindestgehalt an $SiO_2$ und den Höchstgehalt an $Al_2O_3$ ist ein relativ hohes Gewichtsverhältnis $SiO_2$ / $Al_2O_3$, das sich positiv auf die Glasbildungseigenschaften und die Bindungsfestigkeit des Glases auswirkt, bereits gewährleistet. Ein hoher $SiO_2$-Gehalt, speziell in Relation zum $Al_2O_3$-Gehalt, kann das Nachschäumen des Glases reduzieren und sich vorteilhaft auf die Verschmelzung auswirken. In einer bevorzugten Ausführung der Erfindung soll dieses Verhältnis mindestens 4,00 betragen.

Sowohl durch $SiO_2$ als auch durch $Al_2O_3$ werden Transformationstemperatur $T_g$ und Verarbeitungstemperatur $V_A$ angehoben, während $B_2O_3$ und die Erdalkalioxide viskositätssenkend wirken.

Das Glas enthält $B_2O_3$ in Anteilen von 3 bis 5,5 Gew.-%. Bevorzugt sind 3,1 bis 5 Gew.-%. Boroxid wirkt vorteilhaft schmelzerleichternd. In höheren Anteilen würde es die Transformationstemperatur $T_g$ des Glases und damit auch die thermische Belastbarkeit des Lampenkolbens zu sehr herabzusetzen.

Der Beitrag der einzelnen Erdalkalioxide zur Viskositätsabsenkung und zur Erhöhung der thermischen Dehnung ist unterschiedlich: BaO wirkt stärker viskositätserhöhend als MgO. CaO liegt in seiner Wirksamkeit zwischen den beiden. Dagegen zeigt CaO bezgl. Erhöhung der thermischen Dehnung eine stärkere Wirkung als MgO und BaO. Daher enthält das Glas die Erdalkalioxide in bestimmten Mengen und in einem bestimmten Verhältnis zueinander:

BaO liegt mit 8,5 bis 9,5 Gew.-% und CaO mit 8,2 bis 10,5 Gew.-% im Glas vor. Weiter enthält das Glas 2,3 bis 5 Gew.-% MgO.

Das Gewichtsverhältnis zwischen der Summe aus CaO und MgO auf der einen Seite und BaO auf der anderen Seite ((CaO+MgO)/BaO) soll weniger als 1,60 betragen.

Auch das Gewichtsverhältnis von CaO zu MgO ist von Bedeutung: Es soll weniger als 4,20 betragen.

Überraschenderweise wurde nun gefunden, daß ein Ceroxid-Zusatz zu Gläsern des genannten Zusammensetzungsbereichs die Schwarzfärbung von Lampen aus diesen Gläsern verringert.

Daher enthält das erfindungsgemäße Glas 0,03 bis 0,3 Gew.-% $CeO_2$. In diesem Konzentrationsbereich ist Ceroxid ohne jede nachteilige Wirkung auf die für Lampengläser notwendigen physikalischen Eigenschaften. Bei höheren Gehalten käme es zu einer störenden Gelbfärbung des Glases, da mit $CeO_2$ die UV-Kante des Glases zu längeren Wellenlängen verschoben wird. Weiter ist $CeO_2$ auch ein gutes Läutermittel, weswegen auf weitere Läutermittel verzichtet werden kann und dennoch eine gute blasenfreie Glasqualität erzielt wird. Aufgrund der guten Läuterwirkung des Ceroxids steigt auch die Reboiltemperatur des Glases an. Hierbei handelt es sich um die Temperatur, bei der eine bei Raumtemperatur visuell blasenfreie Glasprobe bei Temperaturerhöhung an der Grenzfläche zu einem Metall (Probenhalter, Mo) plötzlich Blasenbildung zeigt. Das erfindungsgemäße Glas neigt also bei der Verschmelzung mit Mo weniger zum Nachschäumen ("reboil") als schlecht ausgeläuterte Gläser.

Die Anforderungen an einen möglichst niedrigen Gehalt an Alkalioxiden und anderen Verunreinigungen sowohl im Glas als auch im Elektrodenmaterial sind im allgemeinen um so höher, je höher die Betriebstemperaturen der Lampe sind.

Es hat sich nun gezeigt, daß bei den erfindungsgemäßen Gläsern, die aufgrund ihrer thermischen Belastbarkeit für die Verwendung als Kolbenmaterial für Lampenkolben mit Kolbentemperaturen von maximal ca. 650 °C geeignet sind, überraschenderweise Alkalioxidgehalte von bis zu < 0,08 Gew.-% zulässig sind.

Zur Verdeutlichung des Effektes, daß größere Mengen an Verunreinigungen toleriert werden, ohne daß das empfindliche System gestört wird und eine Schwarzfärbung des Kolbens auftritt, sei auf die unten angeführten Beispiele ver-

EP 0 913 366 B1

wiesen.

Die Tatsache, daß beim erfindungsgemäßen Glas Alkalioxidgehalte von 0,03 Gew.-% und mehr, nämlich bis zu < 0,08 Gew.-%, tolerierbar sind, bedeutet eine Vereinfachung und Verbilligung der Herstellung des Glases und der Lampe, da dieser höhere Grenzwert nicht die Verwendung von extrem alkaliarmen Rohstoffen aller oxidischen Komponenten verlangt.

Wie schon oben erwähnt, ist auch der Gehalt an Wasser im Glas von Bedeutung. Er soll auf höchstens 0,02 Gew.-% beschränkt bleiben. Auch der Wassergehalt kann durch die gezielte Auswahl der Rohstoffe und die Schmelzbedingungen entsprechend niedrig gehalten werden. Beispielsweise kann er durch die Verwendung von Aluminiumoxid statt Aluminiumhydroxid gesenkt werden.

Die erfindungsgemäßen Gläser mit thermischen Ausdehnungskoeffizienten $\alpha_{20/300}$ zwischen $4,4 * 10^{-6}$/K und $4,7 * 10^{-6}$/K und Transformationstemperaturen $T_g$ von mehr als 710 °C zeigen auch im Lampentest (s.u.) eine ausreichende thermische Belastbarkeit und ihre Eignung für die Verwendung als Kolbenmaterial für Lampenkolben mit Kolbentemperaturen von maximal ca. 650 °C. Ihre Beständigkeit gegen das Nachschäumen wird durch Reboiltemperaturen von wenigstens 1430 °C dokumentiert.

**Beispiele:**

Zur Herstellung der Beispielgläser wurden als Rohstoffe für die jeweiligen oxidischen Komponenten Quarzsand, Borsäure, Aluminiumoxid, Dolomit, Calcium-Bariumcarbonat und Ceroxid eingesetzt, wobei ein alkaliarmes Bariumcarbonat verwendet wurde, während die anderen Rohstoffe die für technische Gläser übliche Reinheit aufwiesen. Für das Beispiel V2 (s. Tabelle 1) wurden durchweg alkaliarme Rohstoffe verwendet. Das gut homogenisierte Gemenge wurde bei 1550 - 1600 °C geschmolzen, geläutert und homogenisiert. Anschließend wurden Rohre gezogen. Die Rohre wiesen eine sehr gute Glasqualität und eine hohe Maßhaltigkeit auf und waren frei von störenden Kriställchen.

Die Tabelle 1 zeigt zwei Beispiele erfindungsgemäßer Gläser (A) sowie drei Vergleichsbeispiele (V) mit ihren Zusammensetzungen (in Gew.-% auf Oxidbasis) und ihren wesentlichen Eigenschaften:

Neben dem thermischen Ausdehnungskoeffizienten $\alpha_{20/300}$, der Transformationstemperatur ($T_g$), der Temperatur bei einer Viskosität von $10^{13}$ dPas (OKP), der Temperatur bei einer Viskosität von $10^{7,6}$ dPas (Ew) und der Temperatur bei einer Viskosität von $10^4$ dPas ($V_A$) ist auch die Reboiltemperatur angegeben. Je höher diese Reboiltemperatur ist, desto weniger neigt das Glas bei der Verschmelzung mit Mo zur Blasenbildung.

Für einen Lampentest wurden auf übliche Art aus den Rohren Halogenlampen (bis zu 45 Exemplare pro Beispiel) hergestellt. Es wurde Elektrodenmaterial unterschiedlichen Reinheitsgrades verwendet (in Tabelle 1 ausgedrückt als "rein" bzw. "verunreinigt"). Die Lampen wurden bei einer Kolbentemperatur von ca. 640 °C betrieben. Im Fall von Beispiel V2 und V3 (s.Tabelle 1) wurde zum einen das verunreinigte Elektrodenmaterial (1)) ausgeglüht (s. 2a)). Zum anderen wurde stattdessen der Glaskolben getempert (s. 2b)). Diese beiden aufwendigen Verfahrensschritte kommen für eine wirtschaftliche Produktion nicht in Frage. Für Beispiele, bei denen im Lampentest eine Schwärzung auf der Glaskolbeninnenseite auftrat, sind in der Tabelle 1 qualitative, visuell bestimmte "Schwärzungsgrade" und die Anteile (in %) der Lampen, die die jeweilige Schwärzung aufwiesen, angegeben. Dabei bedeuten 0 keine Schwärzung, 1 eine leichte, 2 eine mittlere und 3 eine starke Schwärzung.

Für das Beispiel A1 wurden die maximale Kristallwachstumsgeschwindigkeit $KG_{max}$ und die Obere Entglasungsgrenze OEG (Liquidustemperatur) bestimmt. Die Ergebnisse $KG_{max}$ = 0,11 μm/min und OEG = 1180 °C (58 K unter $V_A$) dokumentieren die gute Kristallisationsstabilität der erfindungsgemäßen Gläser.

Die Beispiele verdeutlichen, daß durch den Cer-Zusatz im Glas die Lampe größere Mengen an Verunreinigungen, sowohl im Glas (Alkalioxide) als auch im Elektrodenmaterial, toleriert, d.h. dennoch gute Ergebnisse im Lampentest zeigt, als die Lampen mit ceroxidfreien Gläsern.

Durch diese Herabsetzung der Anforderungen an die Reinheit der Glasrohstoffe und des Elektrodenmaterials sowie der Herstellungsbedingungen wird die Herstellung von Lampen mit dem erfindungsgemäßen Glas einfacher und preiswerter.

Tabelle 1:

| Ausführungsbeispiele (A) und Vergleichsbeispiele (V): Zusammensetzungen der Gläser (in Gew.-%) und ihre wesentlichen Eigenschaften | | | | | |
|---|---|---|---|---|---|
| | V1 | V2 | A1 | A2 | V3 |
| SiO$_2$ | 59,1 | 59,1 | 59,1 | 59,8 | 56,3 |
| Al$_2$O$_3$ | 14,5 | 14,5 | 14,5 | 14,5 | 15,7 |
| B$_2$O$_3$ | 4,85 | 4,85 | 4,85 | 3,5 | 4,65 |

Tabelle 1: (fortgesetzt)

| Ausführungsbeispiele (A) und Vergleichsbeispiele (V): Zusammensetzungen der Gläser (in Gew.-%) und ihre wesentlichen Eigenschaften | | | | | |
|---|---|---|---|---|---|
| | V1 | V2 | A1 | A2 | V3 |
| MgO | 2,5 | 2,5 | 2,5 | 5,0 | 5,6 |
| CaO | 10,3 | 10,3 | 10,3 | 8,4 | 8,3 |
| BaO | 8,85 | 8,75 | 8,75 | 8,8 | 8,1 |
| $CeO_2$ | - | - | 0,3 | 0,03 | - |
| $Sb_2O_3$ | 0,17 | 0,1 | - | - | - |
| $Na_2O$ | 0,11 | 0,02 | 0,06 | 0,065 | 0,03 |
| $K_2O$ | 0,02 | 0,01 | 0,01 | 0,006 | 0,02 |
| $H_2O$ [Gew.-%] | 0,016 | 0,020 | 0,019 | 0,011 | 0,017 |
| $\alpha_{20/300}$ [$10^{-6}$/K] | 4,58 | 4,55 | 4,54 | 4,59 | 4,45 |
| $T_g$[°C] | 719 | 715 | 714 | 725 | 714 |
| OKP [°C] | 725 | 725 | 725 | n.b. | 726 |
| Ew [°C] | 940 | 940 | 940 | n.b. | n.b. |
| $V_A$ [°C] | 1237 | 1236 | 1238 | 1244 | 1180 |
| Reboiltemp. [°C] | n.b. | 1465 | 1482 | 1470 | 1430 |
| Elektrodenmaterial | rein | 1) verunreinigt 2a) ausgeglüht 2b) Glas getempert | verunreinigt | | 1) verunreinigt 2a) ausgeglüht 2b) Glas getempert |
| "Lampentest" | Schwärzung | 1) Schwärzung 2a) keine Schwärzung 2b) keine Schwärzung | keine Schwärzung | keine Schwärzung | 1) Schwärzung 2a) keine Schwärzung 2b) keine Schwärzung |
| Schwärzungsgrad : % | n.b. | 1) 0:7; 1:8; 2:18; 3:66 | - | | 1) 0:37; 1:23; 2:17; 3:23 |
| n.b.= nicht bestimmt | | | | | |

**Patentansprüche**

1. Erdalkalialuminoborosilicatglas für Molybdän-Komponenten aufweisende Lampenkolben mit Kolbentemperaturen von maximal 650 °C,
**gekennzeichnet durch**
folgende Zusammensetzung (in Gew.-% auf Oxidbasis):

| | |
|---|---|
| $SiO_2$ | 59 - 61 |
| $Al_2O_3$ | 13,5 - 15,5 |
| $B_2O_3$ | 3 - 5,5 |
| MgO | 2,3 - 5 |
| CaO | 8,2 - 10,5 |
| BaO | 8,5 - 9,5 |

(fortgesetzt)

| CeO$_2$ | 0,03 - 0,3 |
|---|---|
| mit | |
| $\frac{MgO + CaO}{BaO} < 1,60$ | |
| CaO / MgO < 4,20 | |

und einem Alkalioxidgehalt von < 0,08 Gew.-%
und einem Wassergehalt von ≤ 0,02 Gew.-%.

2. Glas nach Anspruch 1,
   **dadurch gekennzeichnet,**
   **daß** es zwischen 3,1 und 5 Gew.-% B$_2$O$_3$ enthält.

3. Glas nach Anspruch 1 oder 2,
   **dadurch gekennzeichnet,**
   **daß** das Gewichtsverhältnis SiO$_2$ / Al$_2$O$_3$ ≥ 4,00 beträgt.

4. Glas nach wenigstens einem der Ansprüche 1 bis 3,
   mit einem thermischen Ausdehnungskoeffizienten $\alpha_{20/300}$ zwischen
   4,4 $*$ 10$^{-6}$/K und 4,7 $*$ 10$^{-6}$/K, einer Transformationstemperatur T$_g$ von mehr als 710 °C und einer Reboiltemperatur
   von wenigstens 1430 °C.

5. Verwendung eines Glases nach wenigstens einem der Ansprüch 1 bis 4 als Kolbenmaterial für Lampenkolben mit
   Kolbentemperaturen von ca. 550 - 650 °C.

**Claims**

1. An aluminoborosilicate glass which contains alkaline earth metals for lamp bulbs which have molybdenum components and bulb temperatures of at most 650°C, **characterized by** the following composition (in % by weight, based on oxide):

| SiO$_2$ | 59 - 61 |
|---|---|
| Al$_2$O$_3$ | 13.5 - 15.5 |
| B$_2$O$_3$ | 3 - 5.5 |
| MgO | 2.3 - 5 |
| CaO | 8.2 - 10.5 |
| BaO | 8.5 - 9.5 |
| CeO$_2$ | 0.03 - 0.3 |
| where | |
| $\frac{MgO + CaO}{BaO} < 1.60$ | |
| CaO/MgO < 4.20 | |

and an alkali metal oxide content of < 0.08% by weight
and a water content of ≤ 0.02% by weight.

2. Glass according to Claim 1, **characterized in that** it contains between 3.1 and 5% by weight of B$_2$O$_3$.

3. Glass according to Claim 1 or 2, **characterized in that** the SiO$_2$/Al$_2$O$_3$ weight ratio is ≥ 4.00.

4. Glass according to at least one of Claims 1 to 3, having a coefficient of thermal expansion $\alpha_{20/300}$ of between 4.4
   $\cdot$ 10$^{-6}$/K and 4.7 $\cdot$ 10$^{-6}$/K, a transformation temperature T$_g$ of more than 710°C and a reboil temperature of at least
   1430°C.

**5.** Use of a glass according to at least one of Claims 1 to 4 as bulb material for lamp bulbs with bulb temperatures of approx. 550-650°C.

**Revendications**

**1.** Verre d'aluminoborosilicate de métal alcalino-terreux pour des ampoules de lampes présentant des composants du molybdène avec des températures d'ampoule de 650°C au maximum, **caractérisé par** la composition suivante (en % en poids sur base d'oxydes) :

| | |
|---|---|
| $SiO_2$ | 59 à 61 |
| $Al_2O_3$ | 13,5 à 15,5 |
| $B_2O_3$ | 3 à 5,5 |
| MgO | 2,3 à 5 |
| CaO | 8,2 à 10,5 |
| BaO | 8,5 à 9,5 |
| $CeO_2$ | 0,03 à 0,3 |
| avec | |
| (MgO + CaO)/BaO < 1,60 | |
| CaO/MgO < 4,20 | |

et une teneur en oxyde de métal alcalin < 0,08 % en poids et une teneur en eau ≤ 0,02 % en poids.

**2.** Verre selon la revendication 1, **caractérisé en ce qu'**il contient entre 3,1 et 5 % en poids de $B_2O_3$.

**3.** Verre selon la revendication 1 ou 2, **caractérisé en ce que** le rapport pondéral $SiO_2/Al_2O_3 \geq 4,00$.

**4.** Verre selon au moins l'une quelconque des revendications 1 à 3, présentant un coefficient de dilatation thermique $\alpha_{20/300}$ entre $4,4 \times 10^{-6}$/K et $4,7 \times 10^{-6}$/K, une température de transition vitreuse $T_g$ de plus de 710°C et une température de rebullage d'au moins 1430°C.

**5.** Utilisation d'un verre selon au moins l'une quelconque des revendications 1 à 4 comme matériau d'ampoule pour des ampoules de lampes présentant des températures d'ampoule d'environ 550 à 650°C.